# EUROPEAN PATENT SPECIFICATION

(11) **EP 2 247 029 B1**
(45) Date of publication and mention of the grant of the patent: **02.09.2015**
(21) Application number: 08706423.4
(22) Date of filing: 30.01.2008
(51) Int. Cl.: H04L 12/18, H04L 29/06, H04W 4/06

(54) **METHOD AND SYSTEM FOR REALIZING MULTI-PART CONFERENCE CALL IN A WIRELESS COMMUNICATION SYSTEM**
VERFAHREN UND SYSTEM ZUR REALISIERUNG EINER MEHRTEILIGEN KONFERENZVERBINDUNG IN EINEM DRAHTLOSEN KOMMUNIKATIONSSYSTEM
PROCÉDÉ ET SYSTÈME POUR RÉALISER UNE COMMUNICATION EN CONFÉRENCE DANS UN SYSTÈME DE COMMUNICATION SANS FIL

(43) Date of publication of application: 03.11.2010
(73) Proprietor: ZTE Corporation, Shenzhen, Guangdong 518057 (CN)
(72) Inventor: SONG, Jianquan, Shenzhen Guangdong 518057 (CN); XU, Ling, Shenzhen Guangdong 518057 (CN); CHU, Li, Shenzhen Guangdong 518057 (CN); YANG, Ri, Shenzhen Guangdong 518057 (CN); SU, Cuixi, Shenzhen Guangdong 518057 (CN)
(74) Representative: Appleyard Lees
(86) International application number: PCT/CN2008/000228
(87) International publication number: WO 2009/100565

(56) References cited:
- EP-A1- 1 324 582
- EP-A1- 1 487 149
- WO-A2-2007/089383
- CN-A- 1 311 599
- CN-A- 1 842 016
- US-A1- 2006 034 202
- US-A1- 2006 047 750
- US-A1- 2006 223 510
- PENG YANG ET AL: "SIP-based Group Service Improvement in CDMA2000 Network", NEXT GENERATION MOBILE APPLICATIONS, SERVICES AND TECHNOLOGIES, 2007. NGMAST '07. THE 2007 INTERNATIONAL CONFERENCE ON, IEEE, PISCATAWAY, NJ, USA, 1 September 2007 (2007-09-01), pages 354-359, XP031142524, ISBN: 978-0-7695-2878-6
- MICHAEL KNAPPMEYER ET AL: "Advanced Multicast and Broadcast Content Distribution in Mobile Cellular Networks", GLOBAL TELECOMMUNICATIONS CONFERENCE, 2007. GLOBECOM '07. IEEE, IEEE, PISCATAWAY, NJ, USA, 1 November 2007 (2007-11-01), pages 2097-2101, XP031196329, DOI: 10.1109/GLOCOM.2007.255 ISBN: 978-1-4244-1042-2
- ROSENBERG CISCO SYSTEMS J: "A Framework for Conferencing with the Session Initiation Protocol (SIP); rfc4353.txt", 20060201, 1 February 2006 (2006-02-01), XP015044786, ISSN: 0000-0003

## Description

### Technical Field

The present invention relates to a wireless communication system, and particularly, to a method and system for implementing a multi-part conference call in a wireless communication system.

### Background of the Invention

The multi-part audio or video conference call has been realized in the fixed communication system, but has not been realized in the wireless communication system yet by now.

Nowadays, all wireless communication systems have defined multicast and broadcast services, namely services sent to a group of subscribers or all subscribers, and a base station (BS) can determine flexible whether unicast connection bearer or multicast and broadcast connection bearer is used according to the number of users currently served by the BS when the BS transmits multicast and broadcast services on the air interface.

Taking WiMAX (Worldwide Interoperability for Microwave Access) wirelss communication system as an example, MCBCS (Multicast and Broadcast Service) is defined in the Service Provider Working Group (SPWG) of the WiMAX Forum, and MBS (Multicast and Broadcast Service) on airlink is defined in IEEE802,16e-2005. The MCBCS defined by the SPWG refers to a service type of a program, i.e., the program is of multicast and broadcast service type; while the MBS of IEEE802.16e-2005 defines a bearing mode of the air interface for the program, i.e., the MBS bearing mode is used. Only if a program is defined as a MCBCS, the MBS bearing mode can be used on the air interface; furthermore, even if a program is defined as a MCBCS, an ASN (Access Service Network) can determine whether to use a multicast and broadcast connection for transmission or use unicast connections for transmission under each BS based on how many users are to receive the MCBCS program under the BS.

Generally, a threshold may be preset, and when the number of users receiving the MCBSC program under the BS exceeds the threshold, the multicast and broadcast connection is used for transmission, otherwise, unicast connections are used for transmission.

The multicast and broadcast framework standard of WiMAX is being formulated at present, but fundamental functional entities have been defined.

The documents, US2006223510A1, WO2007089383A2, US2006034202A1, PENG YANG ET AL"SIP-based group service improvement in cdma 2000 nwetwork", next generation mobile application, services and technologies, 2007. NGMAST'07. The 2007 international conference on, IEEE, PISCATAWAY, NJ, USA, 1 september 2007, pages 354-359, xp031142524, ISBN:978-0-7695-2878-6, and MICHAEL KNAPPMEYER EL AL:"advanced multicast and broadcast content distribution in mobile celluar networks", GLOBAL TELECOMMUNICATIONS CONFERENCE, 2007. GLOBECOM'07. IEEE, PISCATAWAY, NJ, USA, 1 November 2007, pages 2097-2101, xp031196329, ISBN:978-1-4244-1042-2, have disclosed the related art of this invention.

### Summary of the Invention

The technical problem to be solved by the present invention is to provide a method and system for implementing a multi-part conference call in a wireless communication system.

To solve the above technical problem, the present invention provides a method and a system as defined in independent claims 1 and 12. Other preferable embodiments are set out in the dependent claims.

The present invention realizes a multi-part audio and/or video conference call service in a wireless communication system by utilizing the multicast and broadcast architecture of the wireless communication system, adding multi-part conference call management and multi-part conference call content provider at the network side and multi-part conference call clients at the terminal side, and combining the content of the multi-part conference call into a multimedia multicast and broadcast program for transmission.

### Brief Description of the Drawings

FIG. 1 is a schematic diagram of the architecture of a MCC in a WiMAX system and uplink and downlink service flows;
FIG. 2 is a flow chart of a method for implementing a multi-part audio and video call in a wireless communication system according to the present invention;
FIG. 3 is a flow chart of generating a MCBCS, program through an uplink channel by a MCC system according to the present invention;
FIG. 4 is a flow chart of transmitting a MCBCS program of a MCC system in a downlink channel according to the present invention;
FIG. 5 is a flow chart of triggering the setup of a MCC bearer by a user through a MCC Management according to the present invention.

### Preferred Embodiments of the Present Invention

For description convenience, the multi-part audio and video conference call is referred to as multi-part conference call for short hereinafter.

One of the characteristics of the multi-part audio and video conference call is that the receiving users may be a few users far away from one another, or may be a lot of users within a building. This characteristic conforms to the property of the multicast and broadcast service in a wireless communication system, so the multicast and broadcast service can be applied undoubtedly to implement a multi-part audio and video conference call in a high speed wireless communication system

The present invention provides a system for implementing a multi-part conférence call in a wireless communication system, in which two new functional entities, Multi-part Conference Call Management MCC Management) and Multi-part Conference Call Content Provider (MCC Content Provider), are added in the multicast and broadcast service architecture or the wireless communication system on the network side, to provide a multi-part conference call service based on the existing multicast and broadcast service of wireless communication.

A Multi-part Conference Call Client (MCC Client) is added in the terminal for participating in a multi-part conference call and uploading and receiving content of the multi-part conference call.

In the following, a WiMAX system is taken as an example for illustrating how to implement a multi-part conference call in a MCBCS of WiMAX.

The WiMAX system implements a multicast and broadcast service through a MCBCS Controller located in a CSN (Connect Service Network), a MCBCS Content Server, and a MCBCS Content Provider. The MCBCS Content Provider provides a source of multicast and broadcast services for the MCBCS Content Server. The MCBCS Content Provider may be located in the CSN, or may be provided by a third part.

As for the multi-part conference call, this type of multicast and broadcast service is implemented by adding the MCC Management and MCC Content Provider in the existing multicast and broadcast service architecture. The newly added MCC Management and MCC Content Provider may be located in the CSN or in an ASP (Application Service Provider); and if they are located in the ASP, it means that the multi-part conference call service is totally provided by a third part.

The following description merely relates to the scenario where the MCC Management and MCC Content Provider are located in the CON, however, the principle thereof is the same as that of the scenario where the MCC Management and MCC Content Provider are located in the ASP.

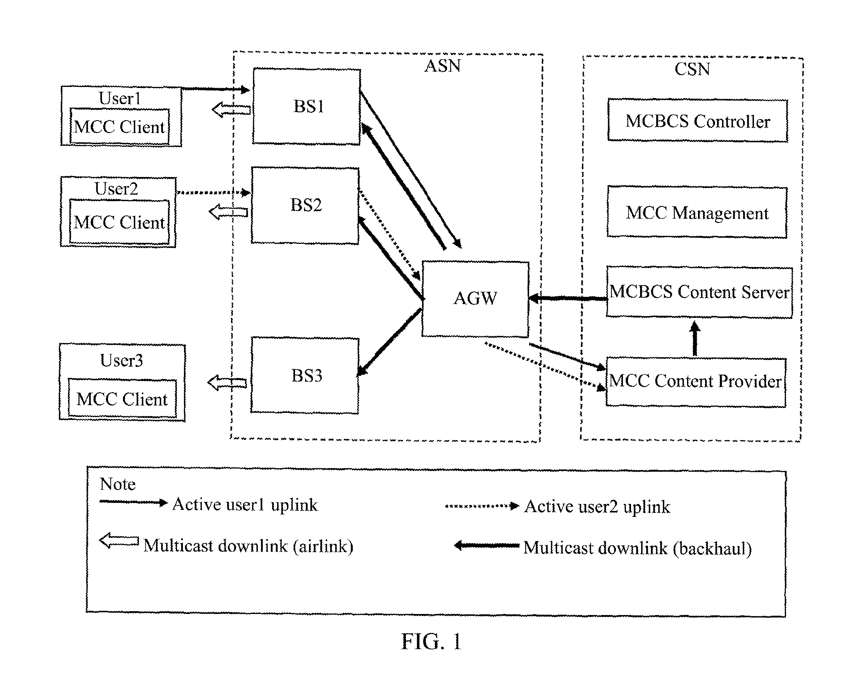

As shown in FIG. 1, a multi-part conference call function is implemented by adding a MCC Mangement and a MCC Content Provider on the network side and MCC Clients on the terminal side in the original multicast and broadcast architecture.

The newly added functional entity MCC Management is in charge of maintaining the creation, release and deletion of a multi-part conference call, time management for a multi-part conference call, and group user management for a multi-part conference call. The time management for a multi-part conference call includes a start time and an end time of a multi-part conference call, and the group user management for a multi-part conference call includes maintenance of active users and inactive users. Once the multi-part conference call is created, the time management and group user management for the multi-part conference call can be performed, even when the multi-part conference call is going on. Once the multi-part conference call is released or deleted, the time and group user management information related to the multi--part conference call can be released.

The newly added functional entity MCC Content Provider is used to combine uplink content, including audio, video or multimedia information, of active users participating in the multi-part conference call into a program of downlink MCBCS, and provide the program as a multicast and broadcast service source to the MCBCS Content Server; then the MCBCS Content Server sends the multicast and broadcast program to the MCC Clients of the user terminals. In a typical multicast and broadcast service, the content source is from a multicast and broadcast service content provider, while the content source of a multi-part conference call is from the MCC Content Provider. The content of the MCC Content Provider is from uplink content, including one or a combination of audio, video, and multimedia information, of active users participating in the multi-part conference call. The newly added emotional entity MCC Content Provider may also be a functional module of the MCBCS Content Server.

The newly added functional entity MCC Client in the terminal may accomplish one or more of the following functions: the MCC Client may be used to receive a terminals user type allocated by the MCC Management; if the terminal user is an active user, the MCC Client may be used to trigger the setup of an uplink between the terminal and the MCC Content Provider so that the active user can upload its audio, video, and multimedia information to the MCC Content Provider through the MCC Client; and the MCC Client may also be used to receive a multicast and broadcast program of a multi-part conference call sent by the MCBCS Content Server. If the terminal is an active user, the MCC Client may filter out the portion of content uploaded by it when receiving downlink content. The MCC Client may also be used for the terminal to initiate a multi-part conference call creation request, and for the terminal to initiate actively the withdrawal from a multi-part conference call, etc.

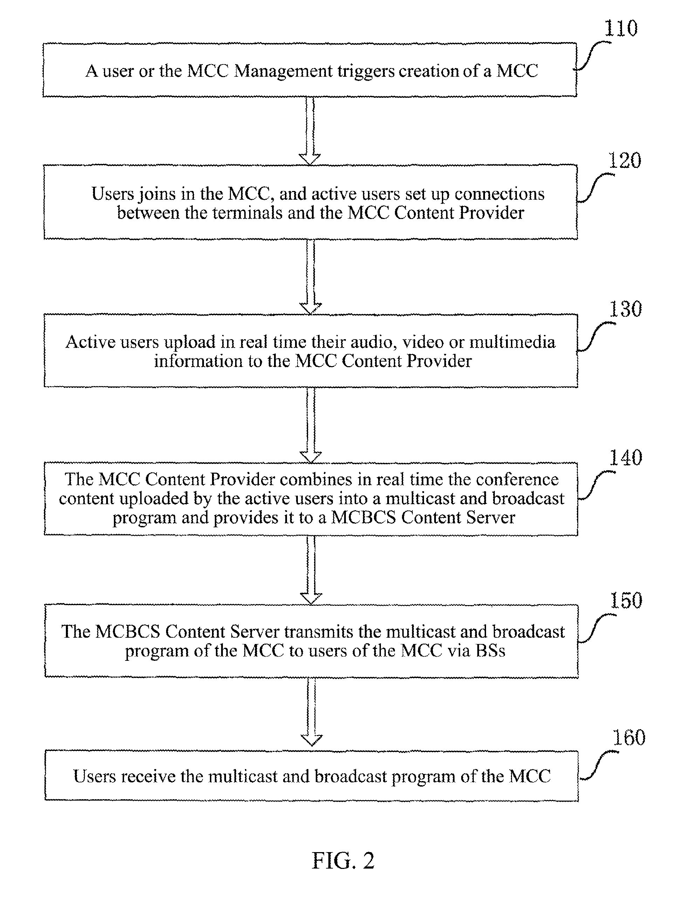

The present invention provides a method for implementing a multi-part audio and video conference call in a wireless communication system. As shown in FIG. 2, the method comprises the following steps of:
110, a user or the MCC Management triggers creation of a multi-part conference call;

The multi-part conference call classifies users into two sorts, namely active users and inactive users, both of which can receive downlink content of the multi-part conference call; however, active users can upload their audio, video or multimedia information to a MCC Content Provider during the multi-part conference call, while inactive users cannot. For a multi-part conference call, active users always exist, while inactive users are not necessary.

Multi-part conference calls may be classified into two types, one of which is open multi-part conference call, and the other is multi-part conference call with a group management characteristic.

If an open multi-part conference call is created by a user, a maximum number of users participating in the multi-part conference call can be specified when the multi-part conference call is created, without differentiating user types, i.e., it is not required to classify users into active users and inactive users. All the users participating in the multi-part conference call are active users, and can unload their audio, video or multimedia information to the MCC Content Provider.

If a multi-part conference call with a group management characteristic is created by a user, it is required to classify users into active users and inactive users. When a multi-part conference call with a group management characteristic is created, one or more of the following types of information may be specified: the number of active users and identifications of active users may be defined, and the number of inactive users and identifications of inactive users may be defaxed. The user type may be changed dynamically, i.e., a user may be converted from an active user to an inactive user, or vice versa, during the conference.

When a user creates a multi-part conference call, at least a start time and an end time of the conference all should be included; and the type of the multi-part conference call being created, i.e. open type or group management type, may also be includes.

120, the multi-part conference call starts, all participant users join in the multi-part conference call, and MCC Clients of active users trigger setup of connections between the user terminals and the MCC Content Provider;

In a typical multicast and broadcast service, it is required to authenticate and authorize a user joining in the multicast, while for a multi-part conference call with a group management characteristic, it is further required to authenticate and authorize a user by a MCC group user management or the MCC Management before the authentication and authorization of a typical multicast and broadcast service.

For a multi-part conference call with a group management characteristic, when a user joins the multi-part conference call, the step of authentication and authorization by the MCC Management is executed first, and if it is determined that the user is a valid user, the MCC Management informs the MCC Client of the user terminal of the user type. If the user is an active user, the MMC Client triggers setup of a connection between the user terminal and the MCC Content Provider to allow the user terminal to upload its audio, video or multimedia information to the MCC Content Provider, if the user is an inactive user, the connection between the terminal and the MCC Content Provider will not be set up.

After the authentication and authorization by the MCC Management, it is required to perform the authentication and authorization of the multicast and broadcast service.

130, active users of the multi-part conference call upload their conference content, such as audio, video, or multimedia information, to the MCC Content Provider in real time;

140, the MCC Content Provider combines the conference content (i.e., audio, video or multimedia information) uploaded by the active users into a multicast and broadcast program, and provides the multicast and broadcast program as a multicast and broadcast service source to the MCBCS Content Server;

The MCC Content Provider may combine in real time or periodically the conference content uploaded by the active users, and sends it to the MCBCS Content Server. The periodic combination of the content uploaded by the active users may be performed in frame unit.

Irrespective of whether a multi-part conference call is triggered by a user or by the network side, the MCC Content Provider is required to combine the uplink content from active users into a multicast and broadcast downlink program of the multi-part conference call. During the combination, two modes can be considered. In the first mode, it needs to be considered that the active user should be able to filter out its uplink content from the downlink multicast and broadcast program, and thus measures should be taken to identity the identification and uplink content of the active user in the combined program during the combination of this mode; in the second mode, such scenario need not to be considered, any identification related to the user is not added, and just the combination of uplink content is performed.

There are two combination methods for implementing the first mode:

Method 1, when combining the upthik content of active users, the MCC Content Provider marks the uplink content of each active user with a user identification that uniquely identifies the user in the multicast and broadcast group. The user identification may be a mobile station identification (MS_ID), or a user identification allocated by the MCC Management for the user during the group user management. When the active user receives a downlink multicast and broadcast service of a multi-part conference call, the MCC Client will filter out the portion of content carrying the user identification of the active user.

Method 2, the MCC Management allocates beforehand a MBS Content ID (Multicast and Broadcast Service Content Identification) for uplink content of each active user. When users join in the reception of a downlink multicast and broadcast service, during airlink DSA (Dynamic Service Addition), for the active user, the MBS Content ID allocated for the active user's uplink content will not be carried. As such, when receiving a multicast service, the active user will not receive the portion of content uploaded by it in the MBS Data.

Specifically, according to 802.16e-2005 protocol, MBS Content IDs correspond to Logical CIDs (Logical Connection IDs) one to one in the same Multicast CID (Multicast Connection ID) of Extended MBS DATA IE (Extended MBS Data Information Element), and the sequence of MBS PDU-s (MBS Protocol Data Units) allocated by a BS corrresponds to the sequence of combinations of Multicast CID and Logical CID. If the MBS Content ID allocated for the uplink content of an active user is absent in the DSA process, when receiving the MBS, the active user will not receive the MBS PDU corresponding to the portion of content uploaded by it.

150, the MCBCS Content Server transmits the multicast and broadcast program of the multi-part conference call provided by the MCC Content Provider to BSs, and then the BSs transmits the multicast and broadcast program to users of the multi-part conference call;

When transmitting the multicast and broadcast program of the multi-part conference call, the BS may use a unicast bearer, or may directly use a multicast and broadcast channel bearer, or determiners whether the unicast bearer or multicast and broadcast channel bearer is used according to the current number of users under the BS.

160, users of the multi-part conference call receive the multicast and broadcast program of the multi-part conference call from the BSs, where the users receive the multicast and broadcast program through the MCC Clients of the terminals.

If the MCC Content Provider applies the first mode to combine the audio, video or multimedia information uploaded by users in step 140, the active user filters out the uplink content of it when receiving the multicast and broadcast program of the multi-part conference call. Wherein, if the combination is implemented with the second method of the first mode, when an active user joins in the multi-part conference call, the MBS Content ID allocated for the content uploaded by the active user will not be carried in the DSA process.

The technical scheme of the present invention is described below in further details in conjunction with accompanying drawings.

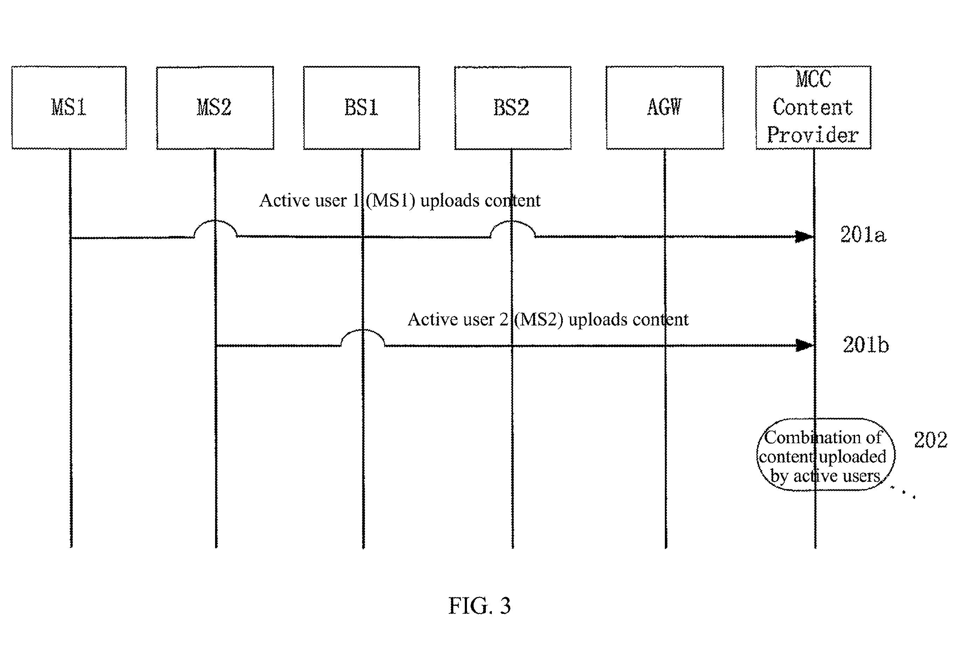

FIG. 3 shows a flow of generating a MCBCS program through an uplink channel by a multi-part conference call system.

201a~201b, active users MS1, MS2 upload their audio, video, or multimedia information respectively to a MCC Content Provider by unicast; and

202, the MCC Content Provider combines the content uploaded by the active users into a multicast and broadcast program.

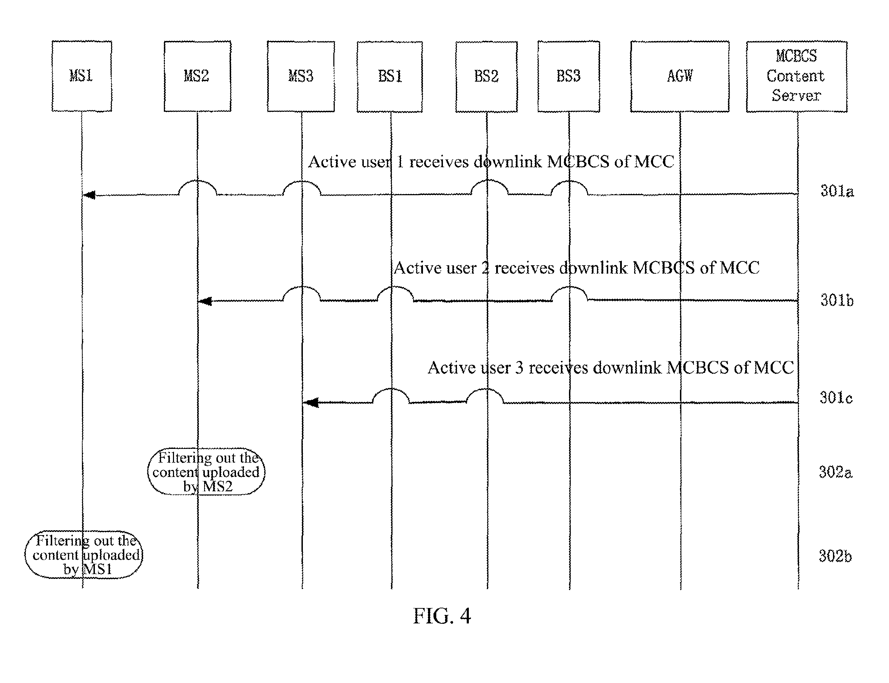

FIG. 4 shows a flow of transmitting a MCBCS program of a multi-part conference call system in a downlink channel.

301a~301c, a MCC Content Provider transmits a combined multicast and broadcast program to terminal users MS1, MS2, and MS3; and

302a~302b, active users MS1 and MS2 filter out the content uploaded by them when receiving the MCBCS program of the multi-part conference call.

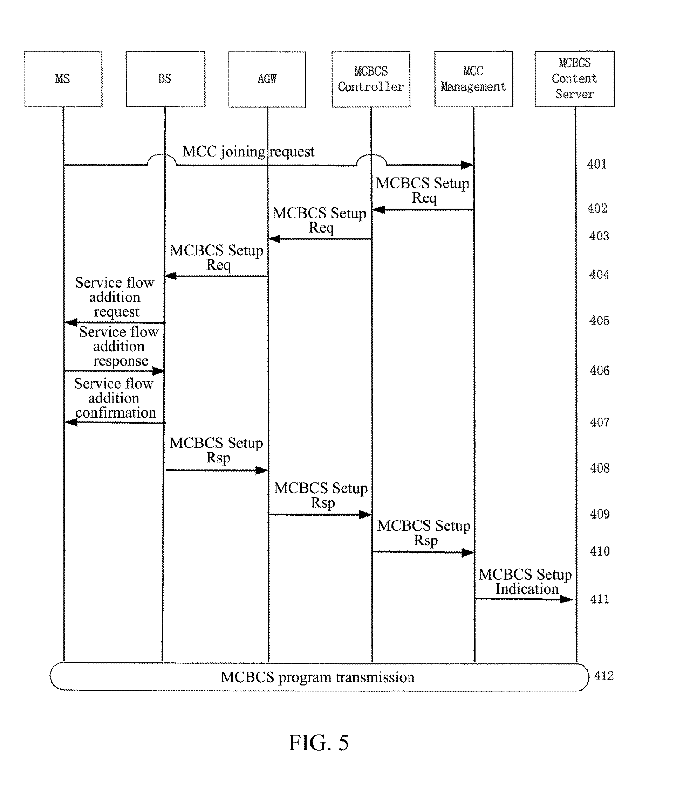

For the first user joining in a multi-part conference call, a flow for setting up a MCBCS of a multi-part conference call is triggered. FIG 5 is a schematic diagram of triggering setup of a multi-part conference call MCBCS through a MCC Management when the first user joins in the multi-part conference call.

401, the MCC Client of a terminal user sends a multi-part conference call joining message to the MCC Management;

402, after the MCC Management receives the multi-part conference call joining message, if the multi-part conference call currently joined in is a multi-part conference call with a group management characteristic, the MCC Management authenticates the user; if the user is a valid user in a multi-part conference call group, the MCC Management informs the MCC Client of the terminal user of a user type and an allocated user identification; further, if the user is an active user, a connection between the terminal and the MCC Content Provider is set up; and if the current time is the start time of the conference, a subsequent multicast and broadcast service flow proceeds.

Before the start of the predetermined multi-part conference call, the MCC Management sends a MCBCS Setup Req (MCBCS Setup Request) to a MCBCS Controller to request setup of the multi-part conference call, where the message may carry a MCBCS type which is multi-part conference call; if the combination of conference content applies the method 1 of the first mode, the message is also required to carry the user identification; if method 2 of the first mode is applied, a MBS Content ID allocated according the sequence of the identifications of active users needs to be carried.

403~404, the MCBCS Controller transfers the MCBCS Setup Req message to a BS via a AGW (Access Gateway); wherein in step 403, after receiving the MCBCS Setup Req message, the MCBCS Controller may further request an AAA (Authentication, Authorization and Accounting) server to authenticate and authorize the MCBCS, and then proceeds to the subsequent flow after the authentication is passed and the MCBCS is authorized.

405~407, service flow addition request, service flow addition response, and service flow addition confirmation.

If the MCC Content Provider applies the method 2 of the first mode to combine the uplink content of users, the MBS Content IDs corresponding to the uplink content of the active users after combination cannot be included in the DSA process for the active users. In this way, the active users won't receive the content uploaded by them.

408~409, after the BS reserves resources for a MCBCS data channel successfully, the BS sends a MCBCS Setup Rsp (MCBCS Setup Response) message to the AGW, and the AGW sends the message to the MCBCS Controller;

410, the MCBCS Controller returns the MCBCS Setup Rsp message to the MCC Management to indicate a connection between the AGW and the terminal user in the multi-part conference call has been set up successfully;

411, the MCC Management sends a MCBCS Setup Indication to a MCBCS Content Server to indicate that the MCBCS Content Server can begin to transmit the MCBCS;

412, the MCBCS Content Server sends the content from the MCC Content Provider via a downlink connection to active users or inactive users.

The method and system for implementing a multi-part audio and video conference call according to the present invention is not limited to the above WiMAX wireless communication system, but is also applicable to other wireless communication systems, such as 3GPP and 3GPP2, which only requires to add the functional entities for implementing a multi-part audio and video conference call as described in the present invention into the multicast and broadcast architectures of the corresponding wireless communication systems.

Of cource, the present invention may have many other embodiments. Those skilled in art may make various corresponding modifications and transformations according to the present invention, without departing from the spirit and essence of the present invention, and the corresponding modifications and transformations shall all fall into the protection scope of the claims appended to the present invention.

### Industrial Applicability

The present invention realizes providing a multi-part conference call service is a wireless communication system by utilizing the existing multicast and broadcast architecture of the wireless communication system, adding functional entities of MCC Management and MCC Content Provider at the network side and MCC Clients at the terminal side in the architecture, and combining the content of the multi-part conference call into a multimedia multicast and broadcast program for transmission. The method and the system of the present invention may be applied in wireless communication systems such as 3GPP, 3GPP2, WiWAX, etc.

## Claims

1. A method for implementing a Multi-part Conference Call MCC in a wireless communication system, **characterized by** comprising:
a user triggering creation of a MCC, and users joining in the MCC (110,120); users of the MCC uploading conference content thereof through MCC client thereof to a MCC Content Provider (130);
the MCC Content Provider combining the conference content uploaded by users into a multicast and broadcast program, and providing the multicast and broadcast program to a multicast and broadcast content server(140); and
the multicast and broadcast content server transmitting the multicast and broadcast program to users of the MCC(150), and the users receiving the multicast and broadcast program(160).

2. The method as claimed in claim 1, wherein the conference content is one or more types of audio, video, and multimedia information.

3. The method as claimed in claim 1, wherein users of the MCC are active users or inactive users, the active users have the ability to upload conference content thereof to the MCC Content Provider, and the inactive users shall not upload conference content thereof to the MCC Content Provider.

4. The method as claimed in claim 3, further comprising:
specifying a type of the MCC as an open MCC or a MCC with a group management characteristic during creation of the MCC, wherein the open MCC refers to a MCC that all the users participating in are active users, and the MCC with a group management characteristic refers to a MCC that the users participating in are active users or inactive users.

5. The method as claimed in claim 1 or 2 or 4, further comprising:
specifying a start time and an end time of the MCC during creation of the MCC.

6. The method as claimed in claim 4, further comprising:
specifying, during creation of the MCC, one or more of the following types of information:
the number of active users, identifications of the active users, the number of inactive users, and identifications of the inactive users, if the type of the MCC created is the MCC with a group management characteristic.

7. The method as claimed in claim 1 or 3, further comprising:
a MCC Management authenticating the users when the users join in the MCC, and after the authentication is passed, the MCC Management informing the users of user types, and if a user is an active user, setting up a connection between the user and the MCC Content Provider.

8. The method as claimed in claim 1, further comprising:
the MCC Content Provider adding an user identification of a user to the conference content uploaded by the user when combining the conference content uploaded by users into the multicast and broadcast program, and the user filtering out the content containing the user identification of the user when receiving the multicast and broadcast program.

9. The method as claimed in claim 1, further comprising:
a MCC Management allocating beforehand a multicast and broadcast content identification for conference content uploaded by a user, and when the user joins in reception of the multicast and broadcast service, the multicast and broadcast content identification corresponding to the conference content uploaded by the user being not carried in an airlink Dynamic Service Addition (DSA) process, so that the user does not receive the conference content uploaded by the user when receiving the multicast and broadcast program.

10. The method as claimed in claim 1 or 8 or 9, wherein the MCC Content Provider combines the conference content uploaded by users periodically.

11. The method as claimed in any one of claims 1-4, 8 and 9, further comprising:
before the MCC begins, a MCC Management sending a multicast and broadcast setup request to a multicast and broadcast service controller to request setup of the MCC, and after connections between an access gateway and user terminals are set up, the MCC Management sending a multicast and broadcast setup indication to the multicast and broadcast content server to allow the multicast and broadcast content server to start multicast and broadcast service transmission.

12. A system for implementing a Multi-part Conference Call MCC in a wireless communication system, comprising a multicast and broadcast service controller, a multicast and broadcast content server, and **characterized by** further comprising a MCC Management and a MCC Content Provider at the network side, and comprising MCC Clients at terminal side, wherein
the MCC Client is configured to set up a connection between a user and the MCC Content Provider, upload conference content of the user to the MCC Content Provider, and receive a multicast and broadcast program of the MCC;
the MCC Management is configured to create, release, and delete the MCC, and perform time management and user management for the MCC;
the MCC Content Provider is configured to receive conference content uploaded by users of the MCC, combine the conference content into a multicast and broadcast program, and provide the multicast and broadcast program to the multicast and broadcast content server; and the multicast and broadcast content server transmits the multicast and broadcast program of the MCC to the MCC Clients.

13. The system as claimed in claim 12, wherein
before the MCC begins, the MCC Management sends a multicast and broadcast setup request to the multicast and broadcast service controller to request setup of the MCC, and after connections between an access gateway and user terminals are set up, the MCC Management sends a multicast and broadcast setup indication to the multicast and broadcast content server to allow the multicast and broadcast content server to start multicast and broadcast service transmission.

14. The system as claimed in claim 12, wherein
the MCC Content Provider adds a user identification of a user to the conference content uploaded by the user when combining the conference content uploaded by users into the multicast and broadcast program, and when the user receives the multicast and broadcast program, the MCC Client filters out the content containing the user identification of the user.

15. The system as claimed in any one of claims 12, 13 and 14, wherein
the MCC Management allocates beforehand a multicast and broadcast content identification for conference content uploaded by a user, when the user joins in reception of the multicast and broadcast service, the multicast and broadcast content identification corresponding to the conference content uploaded by the user is not carried in an airlink Dynamic Service Addition DSA process, and the MCC Client does not receive the conference content uploaded by the MCC Client when receiving the multicast and broadcast program.

16. The system as claimed in any one of claims 12, 13 and 14, wherein
the MCC Content Provider combines the conference content uploaded by users via the MCC Clients periodically.

## Patentansprüche

1. Verfahren zum Implementieren einer Mehrparteien-Konferenzschaltung MCC in einem drahtlosen Kommunikationssystem, **dadurch gekennzeichnet, dass** es aufweist:
einen Benutzer, der die Erstellung einer MCC auslöst, und Benutzer, die der MCC beitreten (110, 120);
wobei Benutzer der MCC Konferenzinhalt davon durch den MCC-Client davon zu einem MCC-Content-Provider (130) hochladen;
wobei der MCC-Content-Provider den Konferenzinhalt, der von Benutzern hochgeladen wird, in ein Multicast- und Broadcast-Programm kombiniert und das Multicast- und Broadcast-Programm an einen Multicast- und Broadcast-Content-Server (140) bereitstellt; und
der Multicast- und Broadcast-Content-Server das Multicast- und Broadcast-Programm zu Benutzern der MCC (150) sendet und die Benutzer das Multicast- und Broadcast-Programm (160) empfangen.

2. Verfahren nach Anspruch 1, wobei der Konferenzinhalt eine oder mehrere Arten von Audio-, Video- und Multimediainformationen ist.

3. Verfahren nach Anspruch 1, wobei Benutzer der MCC aktive Benutzer oder inaktive Benutzer sind und die aktiven Benutzer die Fähigkeit aufweisen, Konferenzinhalt davon zum MCC-Content-Provider hochzuladen, und die inaktiven Benutzer keinen Konferenzinhalt davon zum MCC-Content-Provider hochladen dürfen.

4. Verfahren nach Anspruch 3, ferner aufweisend:
das Spezifizieren einer Art der MCC als eine offene MCC oder eine MCC mit einer Gruppenmanagementeigenschaft während des Erstellens der MCC, wobei die offene MCC auf eine MCC verweist, bei der alle Benutzer, die daran teilnehmen, aktive Benutzer sind, und die MCC mit einer Gruppenmanagementeigenschaft auf eine MCC verweist, bei der die Benutzer, die daran teilnehmen, aktive Benutzer oder inaktive Benutzer sind.

5. Verfahren nach Anspruch 1 oder 2 oder 4, ferner aufweisend:
das Spezifizieren einer Startzeit und einer Endzeit der MCC während des Erstellens der MCC.

6. Verfahren nach Anspruch 4, ferner aufweisend:
das Spezifizieren von einer oder mehreren von den folgenden Arten von Informationen, während des Erstellens der MCC:
die Anzahl an aktiven Benutzern, Identifikationen der aktiven Benutzer, die Anzahl an inaktiven Benutzern und Identifikationen der inaktiven Benutzer, wenn die Art der erstellten MCC die MCC mit einer Gruppenmanagementeigenschaft ist.

7. Verfahren nach Anspruch 1 oder 3, ferner aufweisend:
ein MCC-Management, das die Benutzer authentifiziert, wenn die Benutzer der MCC beitreten, und das die Benutzer über Benutzertypen informiert, nachdem die Authentifizierung bestanden wurde, und eine Verbindung zwischen dem Benutzer und dem MCC-Content-Provider einrichtet, wenn ein Benutzer ein aktiver Benutzer ist.

8. Verfahren nach Anspruch 1, ferner aufweisend:
dass der MCC-Content-Provider ein Benutzerkennzeichen eines Benutzers zum vom Benutzer hochgeladenen Konferenzinhalt hinzufügt,
wenn er den Konferenzinhalt, der von Benutzern in das Multicast- und Broadcast-Programm hochgeladen wurde, kombiniert, und der Benutzer den Inhalt,
der das Benutzerkennzeichen des Benutzers enthält, herausfiltert, wenn er das Multicast- und Broadcast-Programm empfängt.

9. Verfahren nach Anspruch 1, ferner aufweisend:
ein MCC-Management, das zuvor eine Multicast- und Broadcast-Inhaltidentifikation für den von einem Benutzer hochgeladenen Konferenzinhalt zuweist, und die Multicast- und Broadcast-Inhaltidentifikation, die dem vom Benutzer hochgeladenen Konferenzinhalt entspricht, nicht in einem Airlink-Dynamic Service Addition (DSA) - Prozess transportiert wird, wenn der Benutzer dem Empfang des Multicast- und Broadcast-Dienstes beitritt, sodass der Benutzer den vom Benutzer hochgeladenen Konferenzinhalt nicht empfängt, wenn er das Multicast- und Broadcast-Programm empfängt.

10. Verfahren nach Anspruch 1 oder 8 oder 9, wobei der MCC-Content-Provider den Konferenzinhalt, der von Benutzern periodisch hochgeladen wird, kombiniert.

11. Verfahren nach einem der Ansprüche 1 bis 4, 8 und 9, ferner aufweisend:
ein MCC-Management sendet eine Multicast- und Broadcast-Einrichtungsanforderung zum Multicast-und Broadcast-Dienst-Controller, bevor die MCC beginnt, um die Einrichtung der MCC anzufordern, und das MCC-Management sendet einen Multicast- und Broadcast-Einrichtungshinweis zum Multicast- und Broadcast-Content-Server, nachdem Verbindungen zwischen einem Zugriffsgateway und Benutzerendeinrichtungen eingerichtet sind, um dem Multicast- und Broadcast-Content-Server zu ermöglichen, eine Multicast- und Broadcast-Dienst-Übertragung zu beginnen.

12. System für das Implementieren einer Mehrparteien-Konferenzschaltung MCC in einem drahtlosen Kommunikationssystem, aufweisend einen Multicast-und Broadcast-Dienst-Controller, einen Multicast-und Broadcast-Content-Server und **dadurch gekennzeichnet, dass** es ferner ein MCC-Management und einen MCC-Content-Provider auf der Netzwerkseite aufweist und MCC-Clients auf der Endeinrichtungsseite aufweist, wobei
der MCC-Client konfiguriert ist, eine Verbindung zwischen einem Benutzer und dem MCC-Content-Provider einzurichten, Konferenzinhalt des Benutzers zum MCC-Content-Provider hochzuladen und ein Multicast- und Broadcast-Programm der MCC zu empfangen;
das MCC-Management konfiguriert ist, die MCC zu erstellen, freizugeben und zu löschen und Zeitmanagement und Benutzermanagement für die MCC auszuführen;
der MCC-Content-Provider konfiguriert ist, Konferenzinhalt, der von Benutzern der MCC hochgeladen wurde, zu empfangen, den Konferenzinhalt in ein Multicast- und Broadcast-Programm zu kombinieren und das Multicast- und Broadcast-Programm an den Multicast- und Broadcast-Content-Server bereitzustellen; und der Multicast- und Broadcast-Content-Server das Multicast- und Broadcast-Programm der MCC zu den MCC-Clients sendet.

13. System nach Anspruch 12, wobei
das MCC-Management eine Multicast- und Broadcast-Einrichtungsanforderung zum Multicast- und Broadcast-Dienst-Controller sendet, bevor die MCC beginnt, um die Einrichtung der MCC anzufordern, und das MCC-Management einen Multicast- und Broadcast-Einrichtungshinweis zum Multicast- und Broadcast-Content-Server sendet, nachdem Verbindungen zwischen einem Zugriffsgateway und Benutzerendeinrichtungen eingerichtet sind, um dem Multicast- und Broadcast-Content-Server zu ermöglichen, eine Multicast- und Broadcast-Dienst-Übertragung zu beginnen.

14. System nach Anspruch 12, wobei
der MCC-Content-Provider ein Benutzerkennzeichen eines Benutzers zum vom Benutzer hochgeladenen Konferenzinhalt hinzufügt, wenn er den Konferenzinhalt, der von Benutzern in das Multicast- und Broadcast-Programm hochgeladen wurde, kombiniert, und der MCC-Client den Inhalt herausfiltert, der das Benutzerkennzeichen des Benutzers enthält, wenn der Benutzer das Multicast- und Broadcast-Programm empfängt.

15. System nach einem der Ansprüche 12, 13 und 14, wobei
das MCC-Management zuvor eine Multicast- und Broadcast-Inhaltidentifikation für den von einem Benutzer hochgeladenen Konferenzinhalt zuweist, wenn der Benutzer dem Empfang des Multicast- und Broadcast-Dienstes beitritt, und die Multicast-und Broadcast-Inhaltidentifikation, die dem vom Benutzer hochgeladenen Konferenzinhalt entspricht, nicht in einem Airlink-Dynamic Service Addition-DSA-Prozess transportiert wird und der MCC-Client den vom MCC-Client hochgeladenen Konferenzinhalt nicht empfängt, wenn er das Multicast- und Broadcast-Programm empfängt.

16. System nach einem der Ansprüche 12, 13 und 14, wobei
der MCC-Content-Provider den Konferenzinhalt, der von Benutzern über die MCC-Clients periodisch hochgeladen wurde, kombiniert.

## Revendications

1. Procédé permettant de mettre en oeuvre une communication en conférence, MCC, à multiples parties dans un système de communication sans fil, **caractérisé en ce qu'**il comprend :
la création provoquée par l'utilisateur d'une communication MCC, et la réunion d'utilisateurs dans la communication MCC (110, 120),
le téléchargement par les utilisateurs de la communication MCC du contenu de celle-ci par l'intermédiaire d'un client de communication MCC pour celle-ci vers un fournisseur de contenu de communication MCC (130),
la combinaison par le fournisseur de contenu de communication MCC du contenu de conférence téléchargé par des utilisateurs en un programme de multidiffusion et de radiodiffusion, et la fourniture du programme de multidiffusion et radiodiffusion à un serveur de contenu de multidiffusion et radiodiffusion (140), et
la transmission par le serveur de contenu de multidiffusion et radiodiffusion du programme de multidiffusion et radiodiffusion aux utilisateurs de la communication MCC (150), et la réception par les utilisateurs du programme de multidiffusion et radiodiffusion (160).

2. Procédé selon la revendication 1, dans lequel le contenu de la conférence est constitué par un ou plusieurs types d'informations audio, vidéo et multimédia.

3. Procédé selon la revendication 1, dans lequel les utilisateurs de la communication MCC sont des utilisateurs actifs ou des utilisateurs inactifs, les utilisateurs actifs ont la capacité de télécharger vers le fournisseur de contenu de communication MCC un contenu de conférence pour celle-ci, et les utilisateurs inactifs ne téléchargent pas vers le fournisseur de contenu de communication MCC de contenu de conférence pour celle-ci.

4. Procédé selon la revendication 3, comprenant en outre :
la spécification, pendant la création de la communication MCC, du type de communication MCC comme étant une communication MCC ouverte ou une communication MCC présentant une caractéristique de gestion de groupe, la communication MCC ouverte faisant référence à une communication MCC dans laquelle tous les utilisateurs participants sont des utilisateurs actifs, et la communication MCC présentant une caractéristique de gestion de groupe faisant référence à une communication MCC dans laquelle les utilisateurs participants sont des utilisateurs actifs ou des utilisateurs inactifs.

5. Procédé selon la revendication 1, 2 ou 4, comprenant en outre :
la spécification, pendant la création de la communication MCC, d'une valeur de début et d'une valeur de fin pour la communication MCC.

6. Procédé selon la revendication 4, comprenant en outre :
la spécification, pendant la création de la communication MCC, d'un ou de plusieurs des types d'informations qui suivant :
le nombre d'utilisateurs actifs, les identifications des utilisateurs actifs, le nombre d'utilisateurs inactifs et les identifications des utilisateurs inactifs, si le type de communication MCC créé est une communication MCC présentant une caractéristique de gestion de groupe.

7. Procédé selon la revendication 1 ou 3, comprenant en outre :
une authentification, par la gestion de communication MCC, des utilisateurs lorsque les utilisateurs rejoignent la communication MCC, et après que l'authentification a été effectuée, les informations sur les types d'utilisateurs aux utilisateurs par la gestion de communication MCC, et si un utilisateur est un utilisateur actif, l'établissement d'une connexion entre l'utilisateur et le fournisseur de contenu de communication MCC.

8. Procédé selon la revendication 1, comprenant en outre :
l'ajout par le fournisseur de contenu de communication MCC d'une identification utilisateur concernant un utilisateur pour le contenu de conférence téléchargé par l'utilisateur lors de la combinaison du contenu de conférence téléchargé par les utilisateurs dans le programme de multidiffusion et radiodiffusion, et le filtrage par l'utilisateur du contenu comportant l'identification de l'utilisateur lors de la réception du programme de multidiffusion et radiodiffusion.

9. Procédé selon la revendication 1, comprenant en outre :
une allocation préliminaire, par la gestion de communication MCC, d'une identification de contenu de multidiffusion et radiodiffusion pour le contenu de conférence téléchargé par l'utilisateur, et lorsque l'utilisateur effectue la jonction en réception du service de multidiffusion et radiodiffusion, l'identification de contenu de multidiffusion et radiodiffusion correspondant au contenu de conférence téléchargé par l'utilisateur n'étant pas transportée dans un traitement additionnel de service dynamique (DSA), de sorte que l'utilisateur ne reçoit pas le contenu de conférence téléchargé par l'utilisateur à la réception du programme de multidiffusion et radiodiffusion.

10. Procédé selon la revendication 1, 8 ou 9, dans lequel le fournisseur de contenu de communication MCC combine périodiquement le contenu de conférence téléchargé par des utilisateurs.

11. Procédé selon l'une quelconque des revendications 1 à 4, 8 et 9, comprenant en outre avant que la communication MCC débute :
un envoi par la gestion de communication MCC d'une demande d'établissement de multidiffusion et radiodiffusion vers un contrôleur de service de multidiffusion et radiodiffusion afin de demander l'établissement de la communication MCC, et après que les connexions entre la passerelle d'accès et les terminaux utilisateurs sont mises en oeuvre, l'envoi par la gestion de communication MCC d'une indication d'établissement de multidiffusion et radiodiffusion au serveur de contenu de multidiffusion et radiodiffusion pour permettre au serveur de contenu de multidiffusion et radiodiffusion de démarrer la transmission d'un service de multidiffusion et radiodiffusion.

12. Système permettant de mettre en oeuvre une communication en conférence, MCC, à multiples parties dans un système de communication sans fil, comprenant un contrôleur de service de multidiffusion et radiodiffusion, un serveur de contenu de multidiffusion et radiodiffusion, et **caractérisé en ce qu'**il comprend en outre une gestion de communication MCC et un fournisseur de contenu de communication MCC au niveau du réseau et qu'il comprend des clients de communication MCC au niveau terminal, dans lequel
le client de communication MCC est configuré pour établir une connexion entre un utilisateur et le fournisseur de contenu de communication MCC, pour télécharger un contenu de conférence de l'utilisateur vers le fournisseur de contenu de communication MCC, et pour recevoir un programme de multidiffusion et radiodiffusion de la communication MCC,
la gestion de communication MCC est configurée pour créer, libérer et supprimer la communication MCC, et pour effectuer la gestion du temps et la gestion des utilisateurs pour la communication MCC,
le fournisseur de contenu de communication MCC est configuré pour recevoir un contenu de conférence téléchargé par des utilisateurs de la communication MCC, pour combiner le contenu de conférence en un programme de multidiffusion et radiodiffusion, et pour fournir les programmes de multidiffusion et radiodiffusion au serveur de contenu de multidiffusion et radiodiffusion, et le serveur de contenu de multidiffusion et radiodiffusion transmet le programme de multidiffusion et radiodiffusion de la communication MCC aux clients de la communication MCC.

13. Système selon la revendication 12, dans lequel avant que la communication MCC débute, la gestion de communication MCC envoie une demande d'établissement de multidiffusion et radiodiffusion au contrôleur de service de multidiffusion et radiodiffusion pour demander l'établissement de la communication MCC, et après que les connexions entre la passerelle d'accès et les terminaux utilisateurs sont établies, la gestion de communication MCC envoie une indication d'établissement de multidiffusion et radiodiffusion au serveur de contenu de multidiffusion et radiodiffusion afin de permettre au serveur de contenu de multidiffusion et radiodiffusion de débuter la transmission de service de multidiffusion et radiodiffusion.

14. Système selon la revendication 12, dans lequel le fournisseur de contenu de communication MCC ajoute l'identification utilisateur concernant un utilisateur au contenu de conférence téléchargé par l'utilisateur lors de la combinaison du contenu de conférence téléchargé par les utilisateurs en programme de multidiffusion et radiodiffusion, et lorsque l'utilisateur reçoit le programme de multidiffusion et radiodiffusion, le client de communication MCC filtre le contenu comportant l'identification de l'utilisateur.

15. Système selon l'une quelconque des revendications 12, 13 et 14, dans lequel
la gestion de communication MCC alloue au préalable une identification de contenu de multidiffusion et radiodiffusion pour le contenu de conférence téléchargé par un utilisateur lorsque l'utilisateur rejoint en réception le service de multidiffusion et radiodiffusion, l'identification de contenu de multidiffusion et radiodiffusion correspondant au contenu de conférence téléchargé par l'utilisateur n'est pas transportée par un traitement additionnel de service dynamique DSA et le client de communication MCC ne reçoit pas le contenu de conférence téléchargé par le client de communication MCC à la réception du programme de multidiffusion et radiodiffusion.

16. Système selon l'une quelconque des revendications 12, 13 et 14, dans lequel
le fournisseur de contenu de communication MCC combine périodiquement le contenu de conférence téléchargé par les utilisateurs par l'intermédiaire des clients de communications MCC.
